(19) 

Europäisches
Patentamt
European
Patent Office
Office européen
des brevets

(11) **EP 1 832 345 A1**

(12) **EUROPEAN PATENT APPLICATION**

(43) Date of publication:
**12.09.2007 Bulletin 2007/37**

(21) Application number: **06004996.2**

(22) Date of filing: **10.03.2006**

(51) Int Cl.:
*B01J 35/10* (2006.01)  *B01D 53/94* (2006.01)
*B01J 23/42* (2006.01)  *B01J 29/03* (2006.01)
*B01J 37/10* (2006.01)  *B01J 29/068* (2006.01)
*B01J 29/86* (2006.01)  *B01J 29/89* (2006.01)
*B01J 23/63* (2006.01)  *B01J 23/648* (2006.01)
*B01J 23/656* (2006.01)  *B01J 23/58* (2006.01)
*B01J 29/076* (2006.01)  *B01J 37/02* (2006.01)

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(71) Applicants:
• **Asahi Kasei Kabushiki Kaisha
Osaka-shi,
Osaka (JP)**
• **The Noguchi Institute
Tokyo (JP)**

(72) Inventors:
• **Komatsu, Tamikuni
Tsukuba-shi
Ibaraki (JP)**
• **Tomokuni, Keizou
Wako-shi
Saitama (JP)**

(74) Representative: **Strehl Schübel-Hopf & Partner
Maximilianstrasse 54
80538 München (DE)**

(54) **Catalyst for exhaust gas purification**

(57) Mesoporous catalyst for purifying lean burn NOx emission including a mesoporous material which substantially has pores with a diameter of 2 to 50 nm and a specific surface area of 100 to 1,400 m²/g, and 0.01 to 20 mass% of a catalyst with an average particle size of 1 to 20 nm which is supported on the mesoporous material and contains platinum.

EP 1 832 345 A1

**Description**

BACKGROUND OF THE INVENTION

(1) Field of the Invention

The present invention relates to mesoporous catalyst having a large specific surface area and a monolith catalyst comprising the mesoporous catalyst applied to gas channel inner walls of a monolith formed body. The use of the monolith catalyst of the present invention allows highly efficient purification treatment of NOx contained in lean burn vehicle exhaust gases.

(2) Description of the Related Art

A three way catalyst that is a leading catalyst for the vehicle exhaust gas purification uses a monolith formed body of cordierite as a catalyst support, and has a structure in which active alumina particles with a size of several micrometers to several tens of micrometers containing, as a catalyst, platinum-palladium-rhodium particles with a size of several hundred nanometers to several micrometers are applied to gas channel inner walls of the formed body. The active alumina particles are an aggregate of microparticles with a size of several tens of nanometers to several hundred nanometers, and adsorbs the catalyst particles in the interstices between the microparticles. The interstice-type pore has a little spatial expanse (namely, planar), and is basically different from the through-hole pore structure (hereinafter referred also to as a pore channel) expanding networkwise existing in the synthetic zeolite and the mesoporous material used in the present invention. That is, the conventional catalyst particles do not assume the state that the catalyst particles are captured in three-dimensional pores.

The catalyst supported on a molecular sieve-like synthetic zeolite is generally referred to as a pore-supported catalyst, and then for distinguishing from this, conventional three way catalysts are, hereinafter, described as adsorption-supported catalysts. The three way catalyst is very effective for the exhaust gas treatment of gasoline vehicles, but is scarcely effective for the exhaust gas treatment of diesel vehicles running with gas oil fuel.

The reason for this is a qualitative difference between the exhaust gases of diesel vehicles and gasoline vehicles and a temperature difference therebetween. Although the oxygen concentration of the gasoline vehicle exhaust gas is at most 1%, since the air/fuel ratio of gas oil is more than several times that of gasoline, the oxygen concentration contained in the diesel exhaust gas is commonly 5% or more. For gasoline vehicles, since the coexisting oxygen is controlled at 1% or less by burning at near the stoichiometric air/fuel ratio showing a stoichiometric mixing weight ratio of air to fuel, the combustion is referred to as rich burn; by contrast, in the diesel fuel combustion, since the intake air flow is largely in excess of the stoichiometic one, and the fuel supply amount is relatively small, the combustion is referred to as lean burn. Although the exhaust gas temperature of gasoline vehicles is ordinarily 300 to 600°C, that of diesel vehicles is 120 to 200°C at the time of transitional running, and 200 to 400°C at the time of steady running. That the three way catalyst cannot be used as a catalyst for the diesel exhaust gas purification results mainly from the oxidative deactivation of the catalyst by a relatively high-concentration oxygen in the exhaust gas, but there is, other than this problem, further a problem of a remarkably low catalytic activity for NOx emission in a low temperature region emitted at the time of transitional running. The catalyst development to purify NOx emission in a low temperature range of 120 to 200°C emitted by diesel vehicles at the time of transitional running has not been solved also in the field of the catalyst chemistry, and a practical catalyst for the diesel exhaust gas treatment is not known even now.

Generally, industrial catalysts are often used in the state of being supported on porous materials. The pores of porous materials are, according to IUPAC, classified into micropores of 2 nm or less in pore diameter, mesopores of 2 to 50 nm and macropores of 50 nm or more. No single porous material having a wide distribution ranging from micro to meso is known other than active carbon. Recently, silica, alumina and silica-alumina mesoporous molecular sieves have been developed which have the pore peak at a position of a few nanometers and a very large specific surface area of 400 to 1,100 $m^2$/g. The molecular sieves are disclosed, for example, in JP-A-5-254827, JP-A-5-503499 and JP-A-6-509374.

SUMMARY OF THE INVENTION

Since the catalyst reaction is a surface reaction, the larger specific surface area of the catalyst has the higher catalytic activity. Besides, the larger specific surface area of a support to support a catalyst more easily develops the catalytic activity. Upon looking at three way catalysts for vehicles from such a viewpoint, the specific surface area of a monolith formed body as a support is about 0.2 $m^2$/g, and the specific surface area of an alumina particle as an adsorbent is 110 to 340 $m^2$/g. Based on its particle size, the specific surface area of the catalyst can be estimated to be about 20 to 40 $m^2$/g. Therefore, it is expected to try to improve the catalyst activity for the diesel exhaust gas by applying a catalyst with an average particle size in the order of nanometers supported on mesoporous material having a high specific surface area to a monolith formed body. (Hereinafter, a catalyst with an average particle size in the order of nanometers is referred to as nanocatalyst, and a pore-supported catalyst supporting a nanocatalyst in mesoporous material is referred to as mesoporous catalyst. The surface area of the nanocatalyst is $10^2$ to $10^4$ times that of the three way catalyst.)

However, although a constitution in which a palladium catalyst is supported on mesoporous silica carrier is disclosed in JP-A-2002-320850 as an exhaust gas purification catalyst in which mesoporous catalyst is adhered to a monolith formed body, a sufficient activity actually does not come to be obtained.

An object of the present invention is, in view of the above described circumstances, to provide a novel catalyst which is remarkably efficient in conducting the purification treatment of NOx contained in the lean burn exhaust gas even in a region of low temperatures, which is not conventionally achieved. Specifically, it is to provide a novel mesoporous catalyst exhibiting activity to the diesel NOx emissions even in a relatively high concentration oxygen atmosphere associated with a lean burn for efficiently purifying the diesel NOx emission, which is conventionally difficult, even in a region of low temperatures and to provide a monolith catalyst to which the catalyst is adhered.

As the results of extensive studies to achieve the above described object, the present inventors have found that a catalyst in which a specified noble metal is supported on a poorly soluble mesoporous material having a specified pore distribution and a high specific surface area and having an IR absorption band at 1,000 cm$^{-1}$ to 1,250 cm$^{-1}$ is very effective for lean burn NOx emission treatment, and have achieved the present invention based on this finding.

The present invention provides mesoporous catalyst for purifying lean burn NOx emission characterized in that the catalyst is a catalyst comprising 0.01 to 20 mass% of a catalyst containing platinum with an average particle size of 1 to 20 nm supported on a poorly soluble mesoporous silica material, which substantially has pores with a diameter of 2 to 50 nm and a specific surface area of 100 to 1,400 m$^2$/g and has an IR absorption band at 1,000 cm$^{-1}$ to 1,250 cm$^{-1}$, and provides a monolith catalyst comprising the mesoporous catalyst adhered to gas channel inner walls of a monolith formed body.

That is, the present invention relates to the following 1 to 12.

1. Mesoporous catalyst for purifying lean burn NOx emission, comprising a mesoporous material which substantially has pores with a diameter of 2 to 50 nm and a specific surface area of 100 to 1,400 m$^2$/g; and 0.01 to 20 mass% of a catalyst with an average particle size of 1 to 20 nm which is supported on the mesoporous material and contains platinum.

2. The mesoporous catalyst according to the above described 1, wherein the mesoporous material has an IR absorption band at 1,000 cm$^{-1}$ to 1,250 cm$^{-1}$.

3. The mesoporous catalyst according to the above described 2, wherein an IR absorption band of the mesoporous material having an IR absorption band at 1,000 cm$^{-1}$ to 1,250 cm$^{-1}$ is introduced by treatment with an acidic substance.

4. The mesoporous catalyst according to any one of the above described 1 to 3, wherein the mesoporous material is monodispersed particles with an average particle size of 20 to 200 nm or an aggregate thereof.

5. The mesoporous catalyst according to any one of the above described 1 to 4, wherein the mesoporous material has a pore surface crystallized.

6. The mesoporous catalyst according to any one of the above described 1 to 5, wherein the mesoporous material is at least one selected from the group consisting of mesoporous silica, mesoporous alumina, mesoporous zirconia, mesoporous ceria, mesoporous lanthanum oxide, and a composite oxide thereof.

7. The mesoporous catalyst according to the above described 6, wherein the mesoporous material is mesoporous silica in which 1 to 20 mol% of silicon constituting the mesoporous silica is substituted with at least one element selected from the group consisting of Group 3A elements including lanthanoid group elements, Group 3B elements, Group 4A elements, Group 5A elements and Group 6A elements in the periodic table.

8. The mesoporous catalyst according to the above described 7, wherein the element substituted for silicon constituting the mesoporous silica is at least one selected from the group consisting of scandium, yttrium, lanthanum, cerium, samarium and gadolinium as the Group 3A elements, boron as the Group 3B elements, titanium and zirconium as the Group 4A elements, niobium and tantalum as the Group 5A elements, and chromium, molybdenum and tungsten as the Group 6A elements.

9. A monolith catalyst for purifying NOx emission, obtained by adhering mesoporous catalyst according to any one of the above described 1 to 8 to gas channel inner walls of a monolith formed body.

10. The monolith catalyst for purifying NOx emission according to the above described 9, wherein the mesoporous catalyst is adhered to the gas channel inner walls of the monolith formed body by forming a thin film-like mesoporous material on the gas channel inner walls of the monolith formed body and allowing a catalyst containing platinum to be supported thereon.

11. Use of a monolith catalyst according to the above described 9 or 10 for NOx emission of small diesel vehicles which perform alternately rich burn and lean burn.

12. Use of a monolith catalyst according to the above described 9 or 10 for NOx emission of heavy duty diesel vehicles equipped with a urea supply system.

The mesoporous catalyst of the present invention can very efficiently conduct the lean burn NOx emission purification treatment in a region of low temperatures, which cannot be conventionally achieved. For example, although a three way catalyst can scarcely purify nitrogen monoxide in the atmosphere of 14% in oxygen concentration, the platinum catalyst supported on mesoporous silica of the present invention can purify 70% or more of nitrogen monoxide coexisting in the atmosphere of 14% in oxygen concentration at 160 to 200°C.

DETAILED DESCRIPTION OF THE INVENTION

Hereinafter, the present invention will be described in detail.

One of features of the present invention is to use mesoporous material as the support of a catalyst for the NOx purification. The reason is advantageous effects thereof, such as the strong capture of the catalyst because of the mesoporous material having through-hole type pores, the expectation of the gas diffusion effect through pore channels, the maintainability of the favorable particle size range of catalyst active species by control of the pore distribution, and the suppression of the catalyst particle reaggregation and uniform high dispersibility of the catalyst by supporting the catalyst in pores.

As described hereinafter, since the particle size of catalyst particles exhibiting a high activity to NOx is nano sized, the pore diameter of mesoporous material as a support is nearly equal to that of catalyst particles. Since the catalyst particle size supported on pores of mesoporous material is usually nearly equal to the pore diameter, a nanocatalyst having a favorable particle size can be uniformly dispersed and supported by controlling the pore diameter of the mesoporous material.

Therefore, the pore diameter and pore distribution of mesoporous material is an important design element, and the specific surface area follows it. The pore diameter of mesoporous material to support a nanocatalyst is in the range of substantially 2 to 50 nm, preferably in the range of 2 to 20 nm. Here referred to as "substantially with a diameter of 2 to 50 nm" is that the pore volume of pores with a diameter of 2 to 50 nm accounts for 60% or more of the total pore volume.

Supporting of a nanocatalyst onto a mesoporous material having a pore diameter which is less than 2 nm is possible, but the pore diameter is preferably 2 mm or more taking the influence of contamination by impurities or the like into consideration. The pore diameter is preferably 50 nm because the dispersed and supported nanocatalyst has a tendency of remarkable growing into very large particles by sintering under a high temperature hydrothermal condition and the like.

The specific surface area is preferably as large as possible unless otherwise specified. The specific surface area of mesoporous material usable in the present invention is 100 to 1,400 $m^2/g$, preferably 100 to 1,200 $m^2/g$, more preferably 400 to 1,200 $m^2/g$. From the viewpoint of the catalyst carrying amount, the specific surface area is preferably 100 $m^2/g$ or more, and on the other hand, from the viewpoint of the material strength, the specific surface area is preferably 1,400 $m^2/g$ or less. Here, the pore size in the present invention means a value of the pore size (indicated in diameter) giving a maximum value in a pore size distribution measured by the pore size distribution measuring method using the BJH method. The specific surface area means a surface area per gram of a substance determined from the BET adsorption isotherm by using the nitrogen physical adsorption.

Then, the mesoporous material used in the present invention is characterized by having IR absorption bands in a region of 1,000 $cm^{-1}$ to 1,250 $cm^{-1}$. Conventionally as the catalyst carrier for vehicles, the activated alumina (that is, γ-alumina) is mainly used. The γ-alumina manufactured by the high-temperature sintering is an amphoteric oxide of a specific surface area of usually 110 to 340 $m^2/g$, and is known to have a high adsorption ability to adsorb catalyst metal ions. On the other hand, although mesoporous material represented by mesoporous silica has expected characteristics such as a strong catalyst capturing property owing to through-hole type pores and a gas diffusion effect through pore channels as described before, the adsorption ability of catalyst metal ions is weaker than that of the above γ-alumina. This is considered to be caused by a special functional group present on the silica surface. However, the present inventors have found that the moderate ability of the silica to adsorb catalyst metal ions has largely contributes to improvement of the catalyst low-temperature activity. This principle has been found to be applicable also to oxides other than silica by introducing a special functional group on the oxides. The observation of a platinum catalyst supported on a γ-alumina and a platinum catalyst supported on mesoporous material represented by mesoporous silica by a high-resolution transmission electron microscope and a high-resolution scanning transmission electron microscope reveals that the former platinum catalyst is scarcely present on the alumina surface but present inside about 100 nm to 200 nm underneath the surface but by contrast, that the latter platinum catalyst is almost present on the surface of the mesoporous material represented by mesoporous silica. Namely, since the NOx purification reaction is a catalytic reaction of a gas on the catalyst, the reason why mesoporous material represented by mesoporous silica is superior for the carrier is considered to be because since a special functional group to adsorb catalyst metal ions is disposed in the vicinity of the pore surface, the catalyst can be supported in the vicinity of the pore surface. Therefore, the present inventors have believed that even oxides other than silica which by nature do not have such a special functional group can be improved in the catalytic performance by introducing a special functional group on the oxide surface. Oxides to which a special functional group can be introduced include Group 3B oxides such as alumina, Group 3A oxides such as yttria, lanthanum oxide, ceria, samarium oxide and gadolinium oxide, Group 4A oxides such as zirconia and titania, Group 5A oxides such as niobia, Group 6A oxides such as molybdenum oxide and tungsten oxide, group 2A oxides such as magnesia, calcia and barium oxide, and composite oxides thereof. Among these, alumina, zirconia, ceria, lanthanum oxide and a composite oxide thereof in which a special functional group is introduced are particularly preferable. The presence of a special functional group of the carrier in the present invention can be identified by a plurality of broad absorption bands in a region of 1,000 to 1,250 cm$^{-1}$ in infrared absorption spectrum. The special functional group shows those absorption bands which are not originally present in alumina and zirconia and overlap the absorption bands of silica, hence is believed to be an M-O$^-$ ion (M being a metal). However, the assignment is not clear at present. The introduction of the special functional group into the carrier of the present invention can usually be performed by the boiling treatment in an aqueous solution of a mineral acid such as nitric acid or sulfuric acid, the baking treatment at 200 to 800°C after impregnation of the carrier with an aqueous solution of a mineral acid, or the gaseous phase treatment at 200 to 800°C by a mixed gas of an acidic gas such as chlorine, nitrogen dioxide or sulfurous acid, and steam. The concentration of an acidic substance and the treatment time can be properly determined taking into consideration the properties of the acidic substance to be used and the chemical properties of the carrier. The treatment can be performed commonly in a concentration of 0.01 mol to 100 mol and in a treatment time of several minutes to several tens of hours.

Further, as mesoporous material used in the present invention, a poorly soluble mesoporous material is preferably used from the viewpoint of durability against a high temperature steam contained in exhaust gas. The degree of poor solubility of the material has practically no problem if in such a degree that the weight of extracted substances when a sample is placed in hot water of 150°C for one hour is 0.01% or less.

Slightly soluble mesoporous materials include, for example, silica, alumina, titania, zirconia, yttria, ceria, niobia, magnesia, calcia, silica-alumina and a composite material thereof, which all are mesoporous. Among these, silica, alumina, zirconia, ceria, lanthanum oxide, silica-alumina and a composite material thereof, which all are mesoporous, are preferable because of their relatively high mechanical properties. Further, among them, mesoporous silica and mesoporous silica-alumina are preferable, and mesoporous silica is especially preferable.

Hereinafter, mesoporous silicas among mesoporous materials will be picked up and explained in further detail.

As mesoporous silicas, that having a low-regularity arrangement of pores, that having a pore arrangement of the hexagonal system (MCM-41, manufactured by Exxon Mobile Corp.), that having a pore arrangement of the cubic system (MCM-48, manufactured by Exxon Mobile Corp.), etc. are known. As a carrier for a catalyst for NOx purification, mesoporous silica having a low-regularity arrangement of pores is preferable. It is believed to possibly provide a favorable result due to short pore lengths in comparison with MCM-41 and MCM-48. The regularity-arrangement of pores is determined by small angle X -ray diffraction (SAXS) and transmission-electron-microscopy (TEM) observation. The mesoporous silicas having a low-regularity arrangement of pores have one SAXS peak and disordered pore arrangement by TEM observation.

Mesoporous silica used in the present invention is usually monodispersed particles of primary particles in the range of 10 nm to 1 μm in average particle size or its aggregate. Among them, monodispersed particles of primary particles in the range of 10 nm to 200 nm in average particle size or its aggregate is especially preferable as the carrier. Since the main cause of the thermal degradation of a catalyst is the growth of catalyst particles by heat (i.e., sintering), suppression of the sintering leads to the improvement of the life of the catalyst. In the mesoporous silica having the above range in average particle size, the limit of particle growth by the sintering of the catalyst is unexpectedly found to be sufficiently controllable. As a result of treating a platinum catalyst supported on mesoporous silica at 750°C for 24 h in the air and examining the relationship between the NOx treatment performance and the particle size of the platinum catalyst, the average particle size of the catalyst particles is found to be controllable in a range of 2 to 15 nm if the mesoporous silica in the above range is used as the support.

Further in the present invention, mesoporous silica whose pore surface is crystallized is particularly preferably used. The crystallization treatment on the pore surface allows a remarkable improvement in thermal resistance to a heat treatment at 750 to 850°C in the air atmosphere. The thermal resistance referred to here means a small thermal change at a high temperature in the pore distribution and specific surface area of the support, and more concretely rates of changes of the pore size and the specific surface area of the support after the treatment at 750°C for 24 h in the air atmosphere as compared to before the crystallization treatment are 10% or less, respectively. In an untreated mesoporous silica, since its pores shrink by the high-temperature thermal treatment into the pore size lessened by 50% or more, the catalyst supported on them is blocked and cannot exhibit the catalyst performance. Accordingly, once the thermal resistance of a support is improved by the crystallization of the pore surface as in the present invention, since the thermal dimensional change of the catalyst supported thereon is suppressed, the catalyst performance is possibly stabilized. Here, the crystallization of a support surface (mesoporous silica surface) in the present invention means the case where the crystallinity is found as a result of measuring the electron diffraction of the porous parts observed by a high-resolution transmitting analytical electron microscope.

The mesoporous silica composited with at least one element selected from the group consisting of Group 3A elements including the lanthanoid group elements, Group 3B elements, Group 4A elements, Group 5A elements and Group 6A elements is especially preferable because it is unexpectedly found to impart a low temperature activity to the catalyst.

As a Group 3A element, scandium, yttrium, lanthanum, cerium, samarium and gadolinium are preferable; as a Group 3B element, boron is preferable; as a Group 4A element, titanium and zirconium are preferable; as a Group 5A element, niobium and tantalum are preferable; and as a Group 6A element, chromium, molybdenum and tungsten are preferable.

Among them, boron, tungsten, niobium and cerium are further preferable, and tungsten and cerium are especially preferable in respect of persistency.

The unexpected low-temperature activity mechanism in which the initiating temperature of the catalytic reaction by mesoporous catalyst using the mesoporous material composited with these elements decreases by about 50 to 100°C has yet to be determined, but is believed to relate to the NOx concentrating effect nearby the catalyst. The amount of these elements introduced is preferably 1 to 20 mol% to silicon constituting the mesoporous silica, more preferably 1 to 10 mol%.

Here, the above described mesoporous material composited with a Group 3A element, etc., means a composite structure in which a part of a metal in a metal oxide such as silica or alumina constituting the mesoporous material (e.g., silicon for silica) is substituted with an element such as the above described Group 3A element, etc.

The catalyst used in the present invention is a catalyst containing platinum.

Although the three way catalyst is conventionally known as the catalyst containing platinum for the vehicle exhaust gas treatment, this catalyst is known to have little effect on the diesel NOx emission purification treatment. The reason is that palladium and rhodium of constituting elements other than platinum is subject to the surface oxidation by low concentrations of oxygen. Since the three way catalyst is composed of platinum-palladium-rhodium, it easily deactivates once being subjected to surface oxidation.

The reason why the present invention uses platinum is that the noble metal has a high catalytic capability to oxidize nitrogen monoxide of the main component in the NOx emission by the coexisting oxygen into nitrogen dioxide, and are chemically stable even in a high temperature oxygen atmosphere.

Nitrogen dioxide produced by the catalytic reaction is easily decomposed into nitrogen and water by a reducing substance such as a lower olefin, a lower paraffin having 1 to 6 carbon atoms (contained in a fuel in a small amount) or ammonia in a urea form (mountable on a truck, etc.).

Since the surface area of catalyst particles is inversely proportional to the square of the particle size, the smaller catalyst particles have a higher catalytic activity. For example, the surface area of a catalyst particle of 1 nm is $10^4$ times larger than that of 0.1 $\mu$m. It is known that since catalyst particles micro-pulverized into nano sizes have plenty of high-order crystalline planes exhibiting activity such as edges, corners and steps, the catalytic activity is not only remarkably improved, but even an inactive metal which does not exhibit catalytic activity in its bulk state sometimes develops an unexpected catalytic activity. Therefore, although finer catalyst particles are more preferable in view of the catalytic capability, since, on the other hand, unfavorable properties such as the surface oxidation and side reactions due to micro-pulverization take place, an optimum range in particle size of the micro-particles exists.

The average particle size of catalyst particles exhibiting the effective activity on the NOx decomposing purification treatment of the object of the present invention is in the range of 1 to 20 nm, and the range of 1 to 10 nm is especially found to exhibit a high activity.

The catalyst of the present invention is a supported-type catalyst supported on pores of mesoporous material. The amount of platinum supported as the catalyst is 0.01 to 20 mass%, preferably 0.1 to 10 mass%, but is usually used in several mass% if there is no problem in terms of the amount.

Although the amount of the platinum catalyst supported on the mesoporous material can exceed 20 mass%, it is not economical because the catalyst in pore depths which scarcely contribute to the reaction increases when the supporting amount is excessive. By contrast, if the amount of the catalyst supported is less than 0.01 mass%, the activity is not sufficient.

By adding a promoter component having different functions to the platinum catalyst of the present invention, the catalyst performance through a synergistic effect can be improved. Examples of such a component include chromium, manganese, iron, cobalt, nickel, copper, zinc, barium, scandium, yttrium, titanium, zirconium, hafnium, niobium, tantalum, molybdenum, tungsten, lanthanum, cerium, barium, palladium, rhodium, iridium, rhenium, and a compound thereof. Among them, preferable are chromium, iron, cobalt and nickel, which make a passivation film, copper which can, relative to the others, highly adsorb a reducing agent, barium oxide which has the NOx occluding property, cerium oxide and manganic oxide, which can moderately oxidize, tungsten oxide as an acidic oxide which has an oxidization ability, copper-zinc, iron-chromium and molybdenum oxide, which are effective for preventing SOx poisoning, tungsten, rhodium, iridium and rhenium which can prevent sintering, and the like. The amount of the component added is usually about 1/10 to 1/100 time of the platinum catalyst, but may be optionally about 1 to 100 times on a mass basis.

The synthesizing method of mesoporous material of the present invention is not especially limited, and a desired material can be fabricated using conventional methods.

For example, it is fabricated according to a conventional method (e.g., the above described JP-A-5-254827, JP-A-5-503499 and JP-A-6-509374) using a surfactant as a template for mesopores.

In this method, a metal alkoxide is generally used for a precursor of mesoporous material. As a surfactant, any of the conventional micelle-forming surfactants used for fabricating the conventional mesopore molecular sieves can be used, for example, a long chain alkylamine, a long chain quaternary ammonium salt, a long chain alkylamine-N-oxide, a long chain sulfonate salt, a polyethylene glycol alkyl ether and a polyethylene glycol fatty acid ester. As a solvent, at least one of water, alcohols and diols is generally used. Among them, water and hydrophilic solvents such as methanol, ethanol and propanol are preferable. The addition of a small amount of a compound having the coordination capability to a metal in the reaction system remarkably enhances the stability of the reaction system. As such a stabilizer, a compound having the metal coordination capability, such as acetylacetone, tetramethylenediamine, ethylenediaminetetraacetic acid, pyridine and picoline, is preferable. The composition of the reaction system composed of a precursor, a surfactant, a solvent and a stabilizer is as follows: the molar ratio of the precursor is 0.01 to 0.60, preferably 0.02 to 0.50; the molar ratio of the precursor/the surfactant is 1 to 30, preferably 1 to 10; the molar ratio of the solvent/the surfactant is 1 to 1,000, preferably 5 to 500; and the molar ratio of the stabilizer/the main material is 0.01 to 1.0, preferably 0.2 to 0.6.

The reaction temperature is in the range of 20 to 180°C, preferably 20 to 100°C. The reaction time is in the range of 5 to 100 h, preferably 10 to 50 h. The reaction product is generally separated by filtration, washed fully with water, and dried, and then, the contained surfactant is extracted with an organic solvent such as an alcohol, and calcined at a high temperature of 500 to 1,000°C to remove it completely, thus obtaining mesoporous material.

When mesoporous silica is synthesized by the above method, the particle size of the obtained mesoporous silica can be controlled by adjusting the hydrogen ion concentration (pH) of the reaction solution. With a pH of 12 to 10, particles of several hundreds or more nanometers in average particle size are obtained. With a pH of 10 to 7, particles of several hundreds nanometers to about 100 mm are obtained. With a pH of 7 to 3, particles of about 100 nm to several tens nanometers are obtained. The crystallization treatment of the pore surface of the mesoporous silica obtained by the above method can be usually performed as follows. It can be performed by putting a crystallization promoter in the pores of the mesoporous silica and hydrothermally treating them. As the crystallization promoter, a known compound, such as zinc sulfate, zinc chloride, antimony chloride, stannic chloride, aluminum chloride, a phosphate or a polyphosphate, is usable. Injection of the crystallization promoter into the pores is usually performed by impregnating with an aqueous solution, thereafter filtrating an excess aqueous solution and vacuum-drying. The concentration of the aqueous solution is not more than the saturation concentration of the crystallization promoter, usually several mass% to several tens mass%. The hydrothermal treatment is usually performed by putting water in a pressure vessel, putting samples therein such that they do not touch the water surface, and thereafter treating usually at a temperature of 150 to 250°C for several ten minutes to several days. The treatment conditions are different depending on the kind of the crystallization promoter, and suitable conditions are empirically determined.

Mesoporous material represented by mesoporous silica composited with at least one element selected from the group consisting of Group 3A elements, Group 3B elements, Group 4A elements, Group 5A elements Group and 6A elements can be fabricated by the similar method to the above-described fabrication method of the mesoporous material by adding a precursor substance of the mesoporous material with an alkoxide, acetylacetonate, etc., of these elements in an appropriate amount.

The mesoporous catalyst of the present invention can be fabricated, for example, by the ion exchange method or the impregnation method. Although these two methods have differences in depositing of the catalyst on the support where the ion exchange method utilizes the ion exchange ability of the support surface, and the impregnation method utilizes the capillary action the support has, their basic processes are almost the same. That is, the mesoporous material is immersed in an aqueous solution of a catalyst precursor, and thereafter filtered, dried, and optionally washed with water, and reduced with a reducing agent, thereby fabricating mesoporous catalyst.

As a platinum catalyst precursor, for example, $H_2PtCl_4$, $(NH_4)_2PtCl_4$, $H_2PtCl_6$, $(NH_4)_2PtCl_6$, $Pt(NH_3)_4(NO_3)_2$, $Pt(NH_3)_4(OH)_2$, $PtCl_4$, and platinum acetylacetonate can be used.

As a material for a promoter component optionally added to the main catalyst, for example, aqueous salts such as chlorides, nitrates, sulfates, carbonates and acetates of the metals as the above described promoter components can be used.

As a reducing agent, hydrogen, an aqueous hydrazine solution, formalin, etc. can be used. The reduction can be conducted under typical conditions known for a corresponding reducing agent. For example, the hydrogen reduction can be conducted by placing a sample in a hydrogen gas flow diluted with an inert gas such as helium, and treating usually at 300 to 500°C for several hours. After the reduction, heat treatment may optionally be conducted in an inert gas flow at 500 to 1,000°C for several hours.

The monolith formed body of the present invention means a formed body whose cross section is mesh-like and which is provided with gas channels parallel in the axial direction with each partitioned by thin walls. The external shape of a formed body is not especially limited, but usually cylindrical. The monolith catalyst of the present invention means a catalyst in which mesoporous catalyst is adhered to the gas channel inner walls of the monolith formed body. The mesoporous catalyst is adhered in an amount of preferably 3 to 30 mass%. It is unfavorable if adhered in an amount exceeding 30%, since the gas will only slowly diffuse to the catalyst inside the support. If the concentration is less than 3%, then insufficient catalytic performance is provided. The amount of the catalyst adhered corresponding to the amount of the catalyst applied to the monolith formed body is preferably 0.03 to 3 mass% of the formed body.

The monolith catalyst of the present invention can be fabricated according to the fabrication method of a monolith formed body to which a three way catalyst for vehicles is adhered. For example, a slurry of usually 10 to 50 mass% is prepared by making a mixture in which mesoporous catalyst and colloidal silica as the binder are mixed in a mass ratio of usually 1:(0.01 to 0.2), and dispersing the mixture in water; thereafter the slurry is adhered to gas channel inner walls of a monolith formed body by immersing the monolith formed body in the slurry; and the resultant is dried, and heat treated in an inert atmosphere such as nitrogen, helium or argon at 500 to 1,000°C for several hours, thereby fabricating the monolith catalyst.

As a binder other than colloidal silica, a methylcellulose, an acrylic resin, a polyethylene glycol, etc., may be optionally used. A monolith catalyst can be fabricated also by an alternative method in which mesoporous material is adhered to a monolith formed body, the catalyst material is then impregnated with a catalyst precursor, and the resultant is reduction treated and heat treated.

The adhesion of mesoporous material on gas channel inner walls of a monolith formed body is performed by a conventional method in which a slurry containing the mesoporous material is adhered and fixed by thermal treatment, or also by a method in which a thin film-like mesoporous material is formed on gas channel inner walls of a monolith formed body by a chemical vapor deposition method (CVD method). The former method cannot have a predetermined catalyst amount supported by one time of coating and necessitates repeating of several times to about ten times of coating processes, since the catalyst is supported on the utmost surface of the adhesion layer of the mesoporous material but hardly penetrates inside. Thereby, the thickness of the catalyst layer becomes 100 μm or more. However, since the purification reaction of automobile exhaust gases occurs catalytically on the catalyst surface, the catalyst present in the vicinity of the surface of the adhesion layer is effective, but the catalyst present in the interior is not well utilized and is ineffective. By contrast, since a thin film-like mesoporous material formed by the latter method has a specific surface area several times to about ten times that of conventionally used supports, the catalyst carrying amount can be made several times to ten times conventional ones only by supporting the catalyst on the utmost surface of the support. Therefore, the exhaust gas purification can be performed with a prohibitively high efficiency compared with conventional ones. In the latter method, an acidic solution in which a surfactant is dissolved is at first adhered on gas channel inner walls of a monolith formed body. Thereafter, a precursor of the mesoporous material in a gaseous state is made to flow through the monolith formed body for a predetermined time at a predetermined temperature, and to generate an intermediate (generally, sol substance) of the mesoporous material. Ammonia water or ammonia gas can be optionally made to flow in order to quench the reaction. The produced intermediate is gelled by baking at a predetermined temperature, and a thin film-like mesoporous material is fixed simultaneously by decomposing and removing the surfactant. The contained acid is optionally removed by washing with water. As the surfactant, any of conventional surfactants to form micells is usable, for example, a long chain alkylamine a long chain quaternary ammonium salt, a long chain alkylamine-N-oxide, a long chain sulfonate salt, a polyethylene glycol alkyl ether and a polyethylene glycol fatty acid salt, have been used for fabricating the conventional mesopore molecular sieves. In addition to the above surfactant, the addition of a compound having a coordination capability to a metal is a small amount remarkably enhances the stability of the reaction system. As such a stabilizer, a compound having the metal coordination capability, such as acetylacetone, tetramethylenediamine, ethylenediaminetetraacetic acid, pyridine and picoline, is preferable. As a solvent, one or more kinds of water, alcohols and diols are usually used. A water-based solvent is preferable. As an acid, a common acid such as nitric acid, sulfuric acid, hydrochloric acid, phosphoric acid, phosphoric anhydride, polyphosphoric acid, acetic acid, oxalic acid, perchloric acid, boric acid or heteropolyacid, is usable. The pH of the acidic aqueous solution is usually in the range of 5 to 0.01. As a precursor of the mesoporous material, a metal alkoxide is usually used. A halide, a hydride, an organic metal compound and the like of a metal which are sublimable or gaseous at normal temperature and pressure can also be used. The reaction time and the reaction temperature are appropriately set depending on the reactivity of the precursor of the mesoporous material to be used, and usually in a range of several seconds to several tens hours and in a range of -20°C to 200°C, respectively. The calcination of the produced intermediate is usually performed in the air in the range of 500°C to 1,000°C for several tens minutes to several tens hours. The composition of a reaction system composed of a precursor, a surfactant, a solvent and a stabilizer has: a molar ratio of the precursor of 0.01 to 0.60, preferably 0.02 to 0.50; a molar ratio of the precursor/the surfactant of 1 to 30, preferably 1 to 10; a molar ratio of the solvent/the surfactant of 1 to 1,000, preferably 5 to 500; and a molar ratio of the stabilizer/the precursor of 0.01 to 1.0, preferably 0.2 to 0.6.

The thickness of mesoporous catalyst layer adhered to a monolith formed body is preferably usually 0.01 μm to 100 μm, especially preferably in the range of 0.1 μm to 50 μm. For obtaining a sufficient diffusion rate of the reaction gas, it is preferably 100 μm or less, and from the viewpoint of the deterioration prevention of the catalyst performance, preferably 0.01 μ or more.

The monolith catalyst of the present invention, when mounted on vehicles, especially on diesel vehicles, can remarkably and effectively purify the lean burn NOx emitted by the vehicles over a wide temperature range of 150 to 700°C. Although a reducing agent is necessary for the NOx emission treatment, since, in the case of small vehicles like passenger cars, a lower olefin and a lower paraffin having 1 to 6 carbon atoms contained in a small quantity in gas oil of the fuel become the reducing agents, the fuel is supplied to the catalyst directly or through a reformer. Since the oxygen concentration is low in the rich burn, and the oxygen concentration is high in the lean burn, the use of the monolith catalyst of the present invention for the exhaust gas purification treatment of small diesel vehicles which can perform alternately the rich burn and the lean burn enables the efficient NOx emission purification treatment over a wide range of 150 to 700°C. Further, in the case of heavy duty diesel vehicles like trucks, since a system can usually be utilized in which ammonia as the reducing agent is made to generate by decomposing urea water, and supplied to the catalyst, the monolith catalyst can be used also as a catalyst for NOx emission purification of heavy duty diesel vehicles mounting the urea supply system.

Hereinafter, the present invention will be specifically illustrated by way of examples.

The small angle X-ray diffraction pattern and powder X-ray diffraction pattern in examples were measured by a RINT2000 X-ray diffractometer manufactured by Rigaku Corp. The average particle size of a catalyst was determined through the direct observation using a transmission electron microscope, and was confirmed to agree with a value calculated by substituting the half band width of the main peak of the powder X-ray diffraction pattern into the Sheller equation. The specific surface area and pore distribution were measured by a Sorptomatic 1800 Analyzer manufactured by Carlo Erba by using nitrogen as the adsorption/desorption gas. The specific surface area was determined by the BET method. The pore distribution was measured for the range of 1 to 200 nm, and shown on a differential distribution determined by the BJH method. Many of synthesized mesoporous materials exhibited a peak at the position of a specific pore diameter in a distribution ascending exponentially toward the left. This peak is, for convenience, referred to as pore peak, and the pore diameter of this was the pore size. The surface hydroxide group was measured by an infrared absorption spectrum analyzer (JASCO FT-IR460). The thermal analysis for examining the residual surfactant in the material was conducted at a temperature rising rate of 20'Cmin$^{-1}$ using a DTA-50 thermal analyzer manufactured by Shimadzu Corp. As a model gas of the vehicle NOx emission, helium-diluted nitrogen monoxide, oxygen and a reducing gas (ethylene or ammonia) was used. NOx contained in the gas after the treatment was measured by a depressurized chemical luminescence method NOx analyzer (Model 42i-HC and 46C-HL, manufactured by Nippon Thermo Co., Ltd.) to calculate the treatment ratio of nitrogen monoxide according to the following expression (1).

$$[1-(\text{absorbance of gas after reaction}/\text{absorbance of gas before reaction})] \times 100(\%)$$

$$(1)$$

Comparative Example 1

Synthesis of comparative sample

An aqueous solution of 0.215 g of PtCl$_4$-5H$_2$O, 0.106 g of PdCl$_2$·2H$_2$O and 0.162 g of Rh(NO$_3$)$_3$·2H$_2$O in 20 ml of distilled water is put in an evaporating dish. 10 g of γ-alumina (microparticles with a particle size of 2 to 3 μm) was added to the solution, and the mixture was evaporated to dryness in a steam bath, and thereafter vacuum-dried at 100°C for 3 h in a vacuum drier. The resultant sample was put in a quartz tube, and reduced in helium-diluted hydrogen gas (10% v/v) flow at 500°C for 3 h, thus synthesizing a catalyst having a noble metal content of about 2 wt%. This was used as a noble metal catalyst simulating a three way catalyst in the comparative experiment.

Example 1

Synthesis of platinum/mesoporous silica catalyst

300 g of distilled water, 240 g of ethanol and 30 g of dodecylamine were put and dissolved in a 1 L beaker. 125 g of tetraethoxysilane was added to the solution while stirring, and the mixture was stirred at room temperature for 22 h.

The reaction product was filtered, washed with water, dried in hot air at 110°C for 5 h, and thereafter calcined in air at 550°C for 5 h to decompose and remove the contained dodecylamine, thus obtaining mesoporous silica.

As the results of the pore distribution and specific surface area measurements, the material had a pore peak at the position of about 2.8 nm, a specific surface area of 830 $m^2$/g, a pore volume of 0.93 $cm^3$/g, and the volume occupied by pores of 2 to 50 nm was 0.93 $cm^3$/g. It was confirmed by a scanning electron microscope that the size of primary particles was 300 to 500 nm, and a plurality of the particles form an aggregate. The small angle X-ray diffractometry revealed no long periodic structure in terms of crystallography with a d-value to indicate a crystal lattice spacing having only one diffraction peak at 3.62 nm. The TEM observation showed disordered regularity of pores.

An aqueous solution of 0.267 g of $H_2PtCl_6 \cdot 6H_2O$ in 20 g of distilled water was put in an evaporating dish. 5 g of the above described mesoporous silica material was added to the solution, and the mixture was evaporated to dryness in a steam bath, and thereafter vacuum-dried at 120°C for 3 h in a vacuum drier. The resultant sample was put in a quartz tube, and reduced in helium-diluted hydrogen gas (10 v/v%) flow at 500°C for 3 h, thus synthesizing mesoporous catalyst with a platinum content of about 2 mass%. The average particle size of the platinum particles supported on the mesoporous catalyst was about 3.0 nm.

Example 2

Synthesis of platinum/crystallization-treated mesoporous silica catalyst and its heat resistance test

30 g of a 10-mass% aqueous zinc sulfate solution was added to 3 g of the mesoporous silica synthesized in Example 1, and stirred for about 10 min; thereafter, the excess solution was removed by vacuum-filtration; the resultant was vacuum-dried at room temperature for two hours. The resultant was put in a cylindrical paper vessel, put in a 50 ml stainless pressure vessel filled with 5 ml of distilled water, hydrothermally treated at 160°C for two hour, allowed to cool to room temperature, taken out from the pressure vessel as a sample, washed with water, vacuum-filtered, and then vacuum-dried at 100°C for three hours. The measurement results of the pore distribution and the specific surface area gave a pore peak positioned at about 2.8 nm, a specific surface area of 830 $m^2$/g, a pore volume of 0.93 $cm^3$/g, and a volume occupied by pores of 2 to 50 nm of 0.93 $cm^3$/g. The porous part was observed by a high-resolution transmission analytic electron microscope, and this porous part was measured by the electron diffraction, from which a weak spot pattern was observed, and the porous part was confirmed to be assigned to the hexagonal silica. Then, the sample obtained above was put in an electric furnace and heat-treated at 750°C for 24 h. The measurement results of the pore distribution and the specific surface area gave a pore peak positioned at about 2.8 nm, a specific surface area of 830 $m^2$/g, a pore volume of 0.93 $cm^3$/g, and a volume occupied by pores of 2 to 50 nm of 0.93 $cm^3$/g. Then, an aqueous solution in which 0.267 g of $H_2PtCl_6 \cdot 6H_2O$ was dissolved in 20 g of distilled water was put in an evaporating dish, and 5 g of the above crystallization-treated mesoporous silica material was added thereto. The solution was evaporated to dryness in a steam bath, put in a vacuum drier, and vacuum-dried at 100°C for three hours. The resulting sample was put in a quartz tube and reduced in a helium-diluted hydrogen gas (10 v/v%) flow at 500°C for three hours to synthesize mesoporous catalyst having an amount of supported platinum of about 2 mass%. The average particle size of the platinum particles supported on the mesoporous catalyst was about 2.8 nm.

Reference Example 1

Heat resistance test of the mesoporous silica

For comparison with the crystallization-treated mesoporous silica synthesized in Example 2, the mesoporous silica of the same raw material was put in an electric furnace and heat-treated at 750°C for 24 h. After the heat-treatment, the pore size was about 1.2 nm; the specific surface area was 920 $m^2$/g ; and the pore volume was 1.05 $cm^3$/g. Thus, the crystallization of the mesoporous silica surface was confirmed to remarkably improve the heat resistance.

Example 3

Synthesis of platinum/mesoporous silica nanoparticle catalyst and its heat resistance test

300 g of distilled water, 240 g of ethanol and 30 g of dodecylamine were put in a 1 L beaker for dissolution, a 10% aqueous acetic acid solution was added thereto, and the mixture was stirred at room temperature for 10 min; the product was filtered, washed with water, air-dried at 110°C for five hours, and baked in the air at 550°C for five hours to decompose and remove the contained dodecylamine; and mesoporous silica nanoparticles were thus obtained. They were confirmed by a scanning electron microscope to be aggregates in which a plurality of primary particles of 30 to 60 nm in average particle size were aggregated. The measurement results of the pore distribution and the specific surface area gave a pore peak positioned at about 2.5 nm, a specific surface area of 950 $m^2/g$, a pore volume of 1.10 $cm^3/g$, and a volume occupied by pores of 2 to 50 nm of 1.10 $cm^3/g$. The porous part was observed by a high-resolution transmission analytic electron microscope, and this porous part was measured by the electron diffraction, from which a halo was observed and the porous part was confirmed to be amorphous. Then, 20 g of an aqueous solution in which 0.267 g of $H_2PtCl_6\cdot6H_2O$ was dissolved in distilled water was put in an evaporating dish, 5 g of the above mesoporous silica nanoparticles was added thereto and the solution was evaporated to dryness in a steam bath, put in a vacuum drier, and vacuum-dried at 120°C for three hours. The resulting sample was put in a quartz tube and reduced in a helium-diluted hydrogen gas (10 v/v%) flow at 500°C for three hours to synthesize mesoporous catalyst having an amount of supported platinum of about 2 mass%. The average particle size of the platinum particles supported on the mesoporous catalyst was about 2.5 nm. Next, the catalyst sample obtained above was put in an electric furnace and heat-treated at 750°C for 24 h. The average particle size was confirmed to be about 15 nm by the powder X-ray diffraction.

Reference Example 2

Heat resistance test of platinum/mesoporous silica catalyst

For comparing with the particle growth suppression of the catalyst after the heat treatment in Example 3, the catalyst of Example 1 was put in an electric furnace and heat-treated at 750°C for 24 h. The average particle size of platinum was confirmed to be about 32 nm by the powder X-ray diffraction. Thus, it was confirmed that use of the mesoporous silica nanoparticle as the carrier could remarkably suppress the sintering of the catalyst particle.

Example 4

Synthesis of platinum/special functional group-introduced mesoporous alumina catalyst

300 g of distilled water, 240 g of ethanol and 30 g of dodecylamine were put in a 1 L beaker for dissolution 120 g of triisopropoxyaluminum was added thereto under stirring, and the solution was stirred at room temperature for 22 h; the product was filtered, washed with water, air-dried at 110°C for five hours, and baked in the air at 550°C for five hours to decompose and remove the contained dodecylamine; and mesoporous alumina was thus obtained. The measurement results of the pore distribution and the specific surface area gave a pore peak positioned at about 3.2 nm, a specific surface area of 380 $m^2/g$, a pore volume of 0.32 $cm^3/g$, and a volume occupied by pores of 2 to 50 nm of 0.32 $cm^3/g$. Then, the obtained mesoporous alumina was added to 1,000 g of an aqueous solution containing 0.1 mass% of sulfuric acid and 0.1 mass% of nitric acid, boiling-treated for three hours, filtered, washed with water, and vacuum-dried at 200°C for three hours. As a measurement result of infrared absorption spectrum, besides the absorption band the mesoporous alumina originally had, new absorption bands were observed at 1,158 $cm^{-1}$ and 1,077 $cm^{-1}$. Then, by using 5 g of this material, mesoporous catalyst having an amount of supported platinum of about 2 mass% was synthesized in the same manner as the method of Example 1.

Comparative Example 2

Synthesis of platinum/mesoporous alumina catalyst

For comparison with Example 4, by using 5 g of the mesoporous alumina before the introduction of hydroxide group synthesized in Example 1, mesoporous catalyst having an amount of supported platinum of about 2 mass% was synthesized in the same manner as the method of Example 1.

Example 5

Synthesis of platinum/special functional group-introduced mesoporous zirconia catalyst

210 g of distilled water, 114 g of ethanol and 32.7 g of 1-hexadecyltrimethylamine bromide were put in a 1 L beaker; A mixed solution of 140.1 g of 70% zirconium tetrapropoxide, 150 g of ethanol and 12 g of acetylacetone was slowly dropped thereto, stirred at room temperature for two hours, and allowed to stand at 80°C for 48 h. This was moved into a stainless autoclave and stirred at 160°C for 24 h to obtain a reaction mixture. The reaction mixture was filtered, washed with water, and dried at 80°C; thereafter, the template was extracted and removed by a 0.1 normal hydrochloric acidic ethanol solution. Then, the resultant was dried in hot air at 110°C for one hour, and baked in the air at 550°C for five hours to completely remove the template contained therein; thus, mesoporous zirconia was obtained. The measurement results of the pore distribution and the specific surface area gave a pore peak positioned at about 3.5 nm, a specific surface area of 155 m$^2$/g, a pore volume of 0.48 cm$^3$/g, and a volume occupied by pores of 2 to 50 nm of 0.42 cm$^3$/g. Then, the obtained mesoporous zirconia was added to 1,000 g of an aqueous solution containing sulfuric acid of 1 mass% and nitric acid of 1 mass%, boiling-treated for one hour, filtered, washed with water, and vacuum-dried at 200°C for three hours. As a measurement result of infrared absorption spectrum, besides the absorption band the mesoporous zirconia originally had, new absorption bands were observed at 1,211 cm$^{-1}$, 1,114 cm$^{-1}$, and 1,047 cm$^{-1}$. Then, by using 5 g of this material, mesoporous catalyst having an amount of supported platinum of about 2 mass% was synthesized in the same manner as the method of Example 1.

Comparative Example 3

Synthesis of platinum/mesoporous zirconia catalyst

For comparison with Example 5, by using 5 g of the mesoporous zirconia before the introduction of hydroxide group synthesized in Example 5, mesoporous catalyst having an amount of supported platinum of about 2 mass% was synthesized in the same manner as in the method of Example 1.

Example 6

Synthesis of platinum/mesoporous borosilicate catalyst

300 g of distilled water, 240 g of ethanol and 30 g of dodecylamine were put and dissolved in a 1 L beaker. 112 g of tetraethoxysilane and 5.4 g of trimethoxyborane were added to the solution while stirring, and the mixture was stirred at room temperature for 22 h. Thereafter, the reaction product was filtered, washed with water, dried in hot air at 100°C for 5 h, and thereafter calcined in the air at 550°C for 5 h to decompose and remove the contained dodecylamine, thus obtaining mesoporous borosilicate material. The material was found to be a borosilicate having a Si/B molar ratio of about 10 by the X-ray diffractometry. As the results of the pore distribution and specific surface area measurements, the material had a pore peak at the position of about 2.7 nm, a specific surface area of 1,132 m$^2$/g, a pore volume of 0.92 cm$^3$/g, and the volume occupied by pores of 2 to 50 nm was 0.80 cm$^3$/g. Using 5 g of this material, mesoporous catalyst having an amount of supported platinum of about 2 mass% was synthesized in the same manner is the method of Example 1.

Example 7

Synthesis of platinum/mesoporous tungstosilicate catalyst

300 g of distilled water, 240 g of ethanol and 30 g of dodecylamine were put and dissolved in a 1 L beaker. 99.6 g of tetraethoxysilane and an aqueous solution of ammonium tungstate (a solution of 17.87 g of ammonium tungstate pentahydrate in 40 g of distilled water) were added to the solution while stirring, stirred at room temperature for 22 h. Thereafter, the reaction product was filtered, washed with water, dried in hot air at 110°C for 5 h, and thereafter calcined in the air at 550°C for 5 h to decompose and remove the contained dodecylamine, thus obtaining mesoporous tungstosilicate material. The material was found to be a tungstosilicate having a Si/W molar ratio of about 10 by the X-ray diffractometry. As the results of the pore distribution and specific surface area measurements, the material had a pore peak at the position of about 3.0 nm, a specific surface area of 830 m$^2$/g, a pore volume of 0.65 cm$^3$/g, and the volume occupied by pores of 2 to 50 nm was 0.60 cm$^3$/g. Using 5 g of this material, mesoporous catalyst having an amount of supported platinum of about 2 mass% was synthesized in the same manner as the method of Example 1.

Example 8

Synthesis of platinum/mesoporous niobium silicate catalyst

150 g of distilled water, 120 g of ethanol and 30 g of dodecylamine were put and dissolved in a 1 L beaker. 62 g of tetraethoxysilane and a solution of pentaethoxyniobium in ethanol (a solution of 9.5 g of pentaethoxyniobium in 5 g of ethanol) were added to the solution while stirring, and the mixture was stirred at room temperature for 22 h. Thereafter, the reaction product was filtered, washed with water, dried in hot air at 100°C for 5 h, and thereafter calcined in the air at 550°C for 5 h to decompose and remove the contained dodecylamine, thus obtaining mesoporous niobium silicate material. The material was found to be a niobium silicate having a Si/Nb molar ratio of about 10 by the X-ray diffractometry. As the results of the pore distribution and specific surface area measurements, the material had a pore peak at the position of about 2.5 nm, a specific surface area of 757 m$^2$/g, a pore volume of 0.63 cm$^3$/g, and the volume occupied by pores of 2 to 50 nm was 0.60 cm$^3$/g. Using 5 g of this material, mesoporous catalyst having an amount of supported platinum of about 2 mass% was synthesized in the same manner as the method of Example 1.

Example 9

Synthesis of platinum/mesoporous cerium silicate catalyst

300 g of distilled water, 240 g of ethanol and 30 g of dodecylamine were put and dissolved in a 1 L beaker. 124 g of tetraethoxysilane and a solution of tetraethoxycerium in ethanol (a solution of 19.05 g of tetraethoxycerium in 20 g of ethanol) were added while stirring, and the mixture was stirred at room temperature for 22 h. Thereafter, the reaction product was filtered, washed with water, dried in hot air at 110°C for 5 h, and thereafter calcined in the air at 550°C for 5 h to decompose and remove the contained dodecylamine, thus obtaining mesoporous cerium silicate material. The material was found to be cerium silicate having a Si/Ce molar ratio of about 10 by the X-ray diffractometry. As the results of the pore distribution and specific surface area measurements, the material had a pore peak at the position of about 3.2 nm, a specific surface area of 850 m$^2$/g, a pore volume of 0.68 cm$^3$/g, and the volume occupied by pores of 2 to 50 nm was 0.65 cm$^3$/g. Using 5 g of this material, mesoporous catalyst having an amount of supported platinum of about 2 mass% was synthesized in the same manner as the method of Example 1.

Example 10

Synthesis of monolith catalyst

1 g of the catalyst of Example 1 and 0.1 g of colloidal silica were added to 10 ml of distilled water, and the solution was stirred to prepare a slurry. In this slurry, five pieces of mini-formed bodies (21 cells; diameter 8 mm × length 9 mm; weight 0.15 g) cut out from a commercial cordierite monolith formed body (400 cells/in$^2$; diameter 118 mm × length 50 mm; weight 243 g) were immersed, and taken out, dried in air, and treated in a nitrogen flow at 500°C for 3 h. The amount of the mesoporous catalyst adhered was about 10 wt% of the mini-formed body, and the platinum supporting amount per mini-formed body was about 0.2 mass%. Five mini-formed bodies thus obtained were filled into a reaction tube for the NOx treatment.

Example 11

Lean burn NOx treatment using ethylene as the reducing agent

A quartz-made continuous flow reaction tube was filled with 0.3 g each of catalyst samples of Comparative Examples 1 to 3 and Examples 1 to 10, and nitrogen monoxide (with a concentration adjusted with helium) was made to flow through the tube for treating. The component molar concentration of the gas to be treated was 0.1% for nitrogen monoxide, 14% for oxygen, 10% for steam and 0.3% for ethylene. The flow rate of the mixed gas introduced into the reaction tube was 100 ml per minute, and the treatment temperature was 100 to 350°C. The exhaust gas was sampled at every additional temperature of 50°C, and the purification treatment ratio of nitrogen monoxide was determined. The results are shown in Table 1.

From Table 1, it is found that the mesoporous catalysts of the present invention can purify NOx coexisting with a high concentration oxygen efficiently even at a low temperature by using a hydrocarbon such as ethylene as the reducing agent. In particular, the platinum catalyst supported on the mesoporous tungstosilicate permitted the efficient NOx purification unprecedently at 160 to 200°C. Therefore, it is found to be suitable for the NOx emission treatment of small diesel vehicles.

Example 12

Rich burn Nox treatment using ethylene as the reducing agent

0.3 g of the catalyst of Example 1 was used for treating nitrogen monoxide. The component molar concentration ratio of the gas to be treated was 0.1% for nitrogen monoxide, 1% for oxygen and 1% for ethylene. The flow rate of the adjusted gas was 100 ml per minute, and the treatment temperature was 100 to 600°C. NOx contained in the exhaust gas after the treatment was quantitatively analyzed to determine the purification treatment ratio of nitrogen monoxide. The results are shown in Table 2.

From Table 2, it is found that the mesoporous catalysts of the present invention can purify NOx in a rich burn condition efficiently over a middle temperature to a high temperature by using a hydrocarbon as the reducing agent.

Therefore, since, if the rich burn and the lean burn are alternately performed, for example, the catalyst of Example 1 can remove NOx over a wide temperature range, the catalyst is found to be suitable for the NOx emission treatment of small diesel vehicles which can perform alternately the lean burn and the rich burn.

Example 13

NOx treatment using ammonia as the reducing agent

Nitrogen monoxide was treated using 0.3 g of the catalyst of Example 1. The component molar concentration ratio of the gas to be treated was 0.1% for nitrogen monoxide, 14% for oxygen, 10% for steam and 0.3% for ammonia. The flow rate of the adjusted gas was 100 ml per minute, and the treatment temperature was 100 to 600°C. NOx contained in the exhaust gas after the treatment was quantitatively analyzed to determine the purification treatment ratio of nitrogen monoxide. The results are shown in Table 3.

From Table 3, it is found that the mesoporous catalyst of the present invention can purify NOx coexisting with a high concentration oxygen efficiently also by using ammonia as the reducing agent. Therefore, the catalyst is found to be suitable for NOx emission purification treatment of heavy duty diesel vehicles mounting a urea supply system as the ammonia source.

Example 14

Fabrication of platinum/thin film-like mesoporous silica/monolith catalyst

30 g of distilled water, 24 g of ethanol, 0.3 g of dodecylamine and 0.5 g of sulfuric acid were put and stirred in a 100 ml beaker to prepare a homogeneous aqueous solution. Five of the same mini-formed bodies as used in Example 10 were put therein, allowed to stand for 10 min, and then taken out and air-dried. These were put horizontally in a desiccator of 200 ml in volume in which a petri dish with 2 g of tetraethylorthosilicate (TEOS) therein was put, so as not to touch TEOS, put in a drier, and treated at 90°C for one hour. The samples were taken out and baked at 500°C for five hours. As a result of observing cut pieces of the obtained samples by a scanning electron microscope, a thin film-like mesoporous silica was confirmed to be formed on the gas channel inner walls of the mini-formed body. The thickness of the mesoporous silica was about 200 nm; the specific surface area was 980 $m^2$/g; and the pore size was 3.2 nm. Then, this formed body was immersed for one hour in 10 g of an aqueous solution in which 0.0267 g of $H_2PtCl_6·6H_2O$ was dissolved, taken out, and vacuum-dried at 100°C for three hours. This sample was put in a quartz tube and heat-treated in a helium-diluted hydrogen gas (10% v/v) flow at 500 °C for three hours. The content of platinum was about 1 mass%.

Example 15

NOx treatment under a lean burn condition using a hydrocarbon by a monolith catalyst containing platinum

One mini-formed body having the catalyst supported thereon fabricated in Example 14 was put in a quartz continuous flow-type reaction tube, and nitrogen monoxide whose concentration was adjusted by helium was made to flow therethrough and treated. The composition molar concentration of the gas to be treated was nitrogen monoxide: 0.1%, oxygen: 14%, steam: 10% and ethylene: 0.3%. The flow-rate of the mixed gas introduced into the reaction tube was 100 ml per minute, and the treatment temperature was 150 to 300°C. NOx contained in the gas after treatment was measured to determine the treatment rate of nitrogen monoxide. The result is shown in Table 4.

As clarified from Table 4, the monolith catalyst of the present invention can purify 80% or more of NOx in the coexistence of a high concentration oxygen by using a hydrocarbon such as ethylene as the reducing agent even in a region of low temperatures of 160 to 200°C.

Accordingly, it is evidently suited for the NOx emission treatment of small diesel vehicles.

Table 1

|  | 160°C | 170°C | 200°C | 250°C | 300°C |
|---|---|---|---|---|---|
| Catalyst of Comparative Example 1 [Pt-Pd-Rh/γ-alumina] | 0% | 0% | 5% | 20% | 30% |
| Catalyst of Example 1 [Pt/mesoporous silica] | 73% | 100% | 99% | 97% | 92% |
| Catalyst of Example 2 [Pt/crystallization-treated Mesoporous silica] | 73% | 100% | 99% | 97% | 92% |

(continued)

|  | 160°C | 170°C | 200°C | 250°C | 300°C |
|---|---|---|---|---|---|
| Catalyst of Example 3 [Pt/Mesoporous silica nanoparticles] | 73% | 100% | 99% | 97% | 92% |
| Catalyst of Example 4 [Pt/Special functional group-introduced Mesoporous alumina | 36% | 54% | 100% | 99% | 93% |
| Catalyst of Comparative Example 2 [Pt/Mesoporous almuna] | 20% | 23% | 54% | 89% | 84% |
| Catalyst of Example 5 [Pt/Special functional group-introduced Mesoporous zirconia] | 32% | 51% | 100% | 96% | 89% |
| Catalyst of Comparative Example 3 [Pt/Mesoporous zirconia] | 16% | 19% | 50% | 84% | 80% |
| Catalyst of Example 6 [Pt/Mesoporous borosilicate] | 100% | 100% | 97% | 87% | 82% |
| Catalyst of Example 7 [Pt/Mesoporous tungstosilicate] | 96% | 100% | 92% | 88% | 79% |
| Catalyst of Example 8 [Pt/Mesoporous niobium silicate] | 57% | 100% | 94% | 89% | 82% |
| Catalyst of Example 9 [Pt/Mesoporous cerium silicate] | 55% | 100% | 88% | 85% | 73% |
| Catalyst of Example 10 [Pt/Mesoporous silica/Monolith] | 37% | 100% | 89% | 82% | 70% |

Table 2

|  | 200°C | 250°C | 300°C | 400°C~600°C |
|---|---|---|---|---|
| Catalyst of Example 1 [Pt/Mesoporous silica] | 7% | 85% | 100% | 100% |

Table 3

|  | 150°C | 200°C | 300°C | 400°C | 500°C | 600°C |
|---|---|---|---|---|---|---|
| Catalyst of Example 1 [Pt/Mesoporous silica] | 100% | 100% | 100% | 100% | 93% | 85% |

Table 4

|  | 160°C | 200°C | 250°C | 300°C |
|---|---|---|---|---|
| Catalyst of Example 14 [Pt/Thin film-like mesoporous silica/Monolith] | 99% | 98% | 95% | 87% |

**Claims**

1. Mesoporous catalyst for purifying lean burn NOx emission, comprising a mesoporous material which substantially has pores with a diameter of 2 to 50 nm and a specific surface area of 100 to 1,400 $m^2$/g; and 0.01 to 20 mass% of a catalyst with an average particle size of 1 to 20 nm which is supported on the mesoporous material and contains platinum.

2. The mesoporous catalyst according to claim 1, wherein the mesoporous material has an IR absorption band at 1,000 $cm^{-1}$ to 1,250 $cm^{-1}$.

3. The mesoporous catalyst according to claim 2, wherein an IR absorption band of the mesoporous material having an IR absorption band at 1,000 $cm^{-1}$ to 1,250 $cm^{-1}$ is introduced by treatment with an acidic substance.

4. The mesoporous catalyst according to any one of claims 1 to 3, wherein the mesoporous material is monodispersed particles with an average particle size of 20 to 200 nm or an aggregate thereof.

5. The mesoporous catalyst according to any one of claims 1 to 4, wherein the mesoporous material has a pore surface crystallized.

6. The mesoporous catalyst according to any one of claims 1 to 5, wherein the mesoporous material is at least one selected from the group consisting of mesoporous silica, mesoporous alumina, mesoporous zirconia, mesoporous ceria, mesoporous lanthanum oxide, and a composite oxide thereof.

7. The mesoporous catalyst according to claim 6, wherein the mesoporous material is mesoporous silica in which 1 to 20 mol% of silicon constituting the mesoporous silica is substituted with at least one element selected from the group consisting of Group 3A elements including lanthanoid group elements, Group 3B elements, Group 4A elements, Group 5A elements and Group 6A elements in the periodic table.

8. The mesoporous catalyst according to claim 7, wherein the element substituted for silicon constituting the mesoporous silica is at least one selected from the group consisting of scandium, yttrium, lanthanum, cerium, samarium and gadolinium as the Group 3A elements, boron as the Group 3B elements, titanium and zirconium as the Group 4A elements, niobium and tantalum as the Group 5A elements, and chromium, molybdenum and tungsten as the Group 6A elements.

9. A monolith catalyst for purifying NOx emission, obtained by adhering mesoporous catalyst according to any one of claims 1 to 8 to gas channel inner walls of a monolith formed body.

10. The monolith catalyst for purifying NOx emission according to claim 9, wherein the mesoporous catalyst is adhered to the gas channel inner walls of the monolith formed body by forming a thin film-like mesoporous material on the gas channel inner walls of the monolith formed body and allowing a catalyst containing platinum to be supported thereon.

11. Use of a monolith catalyst according to claim 9 or 10 for NOx emission treatment of small diesel vehicles which perform alternately rich burn and lean burn.

12. Use of a monolith catalyst according to claim 9 or 10 for NOx emission treatment of heavy duty diesel vehicles equipped with a urea supply system.

**European Patent Office**

# EUROPEAN SEARCH REPORT

Application Number

EP 06 00 4996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | US 2006/094596 A1 (KOMATSU TAMIKUNI ET AL) 4 May 2006 (2006-05-04) * claims; examples * ----- | 1-12 | INV. B01J35/10 B01D53/94 B01J23/42 |
| E | DATABASE WPI Section Ch, Week 200626 Derwent Publications Ltd., London, GB; Class E36, AN 2006-245949 XP002395688 & JP 2006 081957 A (ASAHI KASEI KK) 30 March 2006 (2006-03-30) * abstract * ----- | 1-12 | B01J29/03 B01J37/10 B01J29/068 B01J29/86 B01J29/89 ADD. B01J23/63 B01J23/648 |
| X | JEON JONG YEOL ET AL: "Selective catalytic reduction of NOx in lean-burn engine exhaust over a Pt/V/MCM-41 catalyst" APPL. CATAL. B ENVIRON.; APPLIED CATALYSIS B: ENVIRONMENTAL SEP 8 2003, vol. 44, no. 4, 8 September 2003 (2003-09-08), pages 311-323, XP002395661 * abstract * * page 311, left-hand column * * page 322 * ----- -/-- | 1-12 | B01J23/656 B01J23/58 B01J29/076 B01J37/02 |

|  |
|---|
| **TECHNICAL FIELDS SEARCHED (IPC)** |
| B01J B01D |

The present search report has been drawn up for all claims

| Place of search | Date of completion of the search | Examiner |
|---|---|---|
| Munich | 22 August 2006 | Besselmann, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

European Patent Office

**EUROPEAN SEARCH REPORT**

Application Number

EP 06 00 4996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SOBCZAK I ET AL: "Preparation and characterisation of Pt containing NbMCM-41 mesoporous molecular sieves addressed to catalytic NO reduction by hydrocarbons" MICROPOROUS AND MESOPOROUS MATERIALS, ELSEVIER SCIENCE PUBLISHING, NEW YORK, US, vol. 78, no. 2-3, 1 March 2005 (2005-03-01), pages 103-116, XP004735958 ISSN: 1387-1811 * page 103, right-hand column, line 8 - line 10 * * page 104, left-hand column, line 37 - line 54 * Section 2. "Experimental" * table 2 * | 1-12 | |
| X | DE 197 42 344 A1 (MAZDA MOTOR CORP., HIROSHIMA, JP) 23 April 1998 (1998-04-23) * page 2, line 38 - line 45 * * page 3, line 1 - line 11 * * examples * | 1-12 | |
| X | US 6 146 602 A (NARULA ET AL) 14 November 2000 (2000-11-14) * column 2, line 25 - line 36 * * column 5, line 55 - column 6, line 20 * * column 6, line 49 - line 56 * * claims 1,11; examples * | 1-12 | TECHNICAL FIELDS SEARCHED (IPC) |
| X | CHEN HANG-RONG ET AL: "A study of novel composite mesoporous zirconia catalyst materials" J. CHEM. ENG. JPN.; JOURNAL OF CHEMICAL ENGINEERING OF JAPAN OCTOBER 2003, vol. 36, no. 10, October 2003 (2003-10), pages 1212-1215, XP002395662 * abstract * | 1-6,9,10 | |

-/--

The present search report has been drawn up for all claims

| Place of search | Date of completion of the search | Examiner |
|---|---|---|
| Munich | 22 August 2006 | Besselmann, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent
Office

**EUROPEAN SEARCH REPORT**

Application Number

EP 06 00 4996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BORODKO YURI ET AL: "Structure sensitivity of vibrational spectra of mesoporous silica SBA-15 and Pt/SBA-15" J PHYS CHEM B; JOURNAL OF PHYSICAL CHEMISTRY B SEP 22 2005, vol. 109, no. 37, 22 September 2005 (2005-09-22), pages 17386-17390, XP002395663 * figures 2,4,10 * * page 17386, left-hand column * ----- | 1-6 | |
| | | | TECHNICAL FIELDS SEARCHED (IPC) |

The present search report has been drawn up for all claims

| Place of search | Date of completion of the search | Examiner |
|---|---|---|
| Munich | 22 August 2006 | Besselmann, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 00 4996

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2006

| Patent document cited in search report | | Publication date | Patent family member(s) | | Publication date |
|---|---|---|---|---|---|
| US 2006094596 | A1 | 04-05-2006 | NONE | | |
| JP 2006081957 | A | 30-03-2006 | NONE | | |
| DE 19742344 | A1 | 23-04-1998 | JP | 10151325 A | 09-06-1998 |
| US 6146602 | A | 14-11-2000 | DE | 60012246 D1 | 26-08-2004 |
| | | | DE | 60012246 T2 | 02-12-2004 |
| | | | EP | 1029582 A1 | 23-08-2000 |
| | | | JP | 3753582 B2 | 08-03-2006 |
| | | | JP | 2000229222 A | 22-08-2000 |

For more details about this annex : see Official Journal of the European Patent Office, No. 12/82

## REFERENCES CITED IN THE DESCRIPTION

### Patent documents cited in the description

- JP 5254827 A
- JP 5503499 A
- JP 6509374 A
- JP 2002320850 A